# EUROPEAN PATENT SPECIFICATION

(11) **EP 2 786 848 B1**
(45) Date of publication and mention of the grant of the patent: **18.05.2016**
(21) Application number: 13162044.5
(22) Date of filing: 02.04.2013
(51) Int. Cl.: B26F 1/38, B29C 70/24, B65H 29/00, B65G 15/16

(54) **A fibre fabric cutting system**
Fasergewebeschneidsystem
Système de coupe de tissu de fibres

(43) Date of publication of application: 08.10.2014
(73) Proprietor: Airbus Operations GmbH, 21129 Hamburg (DE); Airbus Operations (S.A.S.), 31060 Toulouse Cedex 9 (FR)
(72) Inventor: Witte, Tassilo, 21680 Stade (DE); Zahlen, Pierre, 21680 Stade (DE); Blot, Philippe, 4000 Nantes (FR)
(74) Representative: Uexküll & Stolberg

(56) References cited:
- EP-A1- 2 246 160
- AT-U1- 6 638
- DE-A1- 3 831 475

## Description

The present invention relates to a fibre fabric cutting system comprising a first conveying assembly including a first endless conveyor belt guided in an endless loop along a first curved path and drivable to move in a first conveying direction along the first curved path, the first curved path comprising a cutting section in which, in an operating position of the fibre fabric cutting system, the first conveyor belt extends in the horizontal direction, a fibre fabric supply unit adapted to receive a web of fibre fabric and operable to supply the web to the cutting section such that when the first conveyor belt is moved in the first conveying direction the web is transported by the first conveyor belt along the cutting section, and a cutting unit disposed near the cutting section and adapted to be operable to cut a web of fibre fabric into sheets, which web is supplied to the cutting section by the fibre fabric supply unit and transported by the first conveyor belt when moving into the first conveying direction. Further, the invention relates to a method for cutting a fibre fabric.

In the production of aircraft and other vehicles composite materials are widely used. Composite materials comprise essentially two parts: a matrix and a reinforcement. The matrix is made of a polymer resin, such as epoxy, that binds reinforcement fibres of the composite material together. The reinforcement of the composite material is e.g. made from carbon fibres or glass fibres. The fibres are commonly supplied to a manufacturer of a composite material in form of a continuous web on large rolls. The web has to be cut into patches, sheets or plies of varying sizes. The number of sheets required for a composite element or component varies drastically. Some elements comprise just a view sheets of fibre fabric, other larger parts comprise up to hundred and more sheets.

In the beginning the fibre fabric was cut manually on a table or workbench into predetermined shapes. Improved cutting assemblies or systems make use of a conveying assembly comprising an endless conveyor belt as a moving workbench. The conveyor belt forms a cutting section in which a web of fibre fabric transported by the conveyor belt is cut by a cutting unit or cutter into multiple sheets. The conveyor belt extends horizontally and in a working height such that an operator can manually remove the recently cut sheets from the conveying assembly without having to bend down. However, the cutting section not only serves as a workbench for cutting sheets. At least a few freshly cut sheets can always be stored along the cutting section downstream of the cutting unit when the conveyor belt moves in a conveying direction such that more than one sheet can be cut at a time.

While the improved cutting systems have already increased the efficiency in cutting sheets of fibre fabric they still suffer from several significant drawbacks. The freshly cut sheets have to be manually removed before they reach the end of the conveyor belt and drop onto the floor of the work shop. Hence, the length of a web of fibre fabric or the number of sheets that can be cut at a time is limited by the length in which the first conveyor belt extends in the horizontal direction beyond the cutting unit. As soon as this whole length has been filled with sheets the operator has to cease the cutting operation and remove at least some sheets from the conveyor belt. This process considerably increases the time that is required for cutting many sheets especially when it comes to building large elements of composite material.

EP 2 246 160 A1 discloses a system for cutting a web of fibre fabric into sheets. The system comprises a conveying assembly and two cutting units. The web of fibre fabric is provided by a fibre fabric supply unit to the conveying assembly. The conveying assembly transports the web of fibre fabric to a cutting section where it is cut into a plurality of sheets. The freshly cut sheets are wound by a rolling-up unit onto drums.

It is, therefore, an objective of the present invention to provide a fibre fabric cutting system which has an increased storage capacity for storing a significant number of sheets of a fibre fabric such that even for large structural elements all sheets required to manufacture the element can be cut in a single operation without having to remove sheets from the fibre fabric cutting system during the cutting process.

The problem is solved by a fibre fabric cutting system in which the first conveying assembly further includes a second endless conveyor belt guided in an endless loop along a second curved path and drivable to move in a second conveying direction along the second curved path. The first curved path and the second curved path are arranged such that when the first and the second conveyor belts are driven to move in the first and second conveying directions, respectively, they cooperate to define for sheets cut by the cutting unit a first transport path comprising a plurality of vertically spaced levels extending transversely to the vertical direction and arranged one above the other. The cutting section defines the first level and each of the subsequent levels is defined by a section of at least one of the first and second curved paths of the first and second conveyor belts in which the respective conveyor belt extends in a direction transversely to the vertical direction and preferably horizontally i.e. perpendicular to the vertical direction. Sheets transported along the first transport path move from one level to the next level starting with the first level. The sheets are supported against the gravitational force alternately by the first and the second conveyor belt on consecutive levels.

The fibre fabric cutting system according to the present invention increases the storage capacity of the cutting system without requiring extra space. By arranging the levels one on top of the other or in a stack advantageously no additional lateral space is required in an operating position. The further levels can be arranged between the cutting section and the floor (or the ceiling) of a workshop without extending horizontally beyond the dimensions of the cutting section by itself. It fills space that is otherwise empty and remains unused.

The fibre fabric cutting system according to the present invention comprises a first conveying assembly with two endless conveyor belts. Each of the conveyor belts is guided in an endless loop along a curved path and drivable to move in a conveying direction. The term conveying direction refers to the overall direction in which a conveying belt moves i.e. a conveyor belt forming an endless loop can only move in two conveying directions. A conveying direction refers only to the movement of the conveyor belt around the conveyor path not to the absolute direction in which a conveyor belt moves at a given point.

The first conveyor belt forms a first curved path that comprises a cutting section. Along the cutting section the belt extends in an approximately horizontal direction i.e. along a plane extending perpendicular to the direction in which the gravitational force acts. Some features of the present invention are characterized herein by the terms "vertical" and "horizontal". These terms refer to the cutting system in an operating position thereof, which operating position may be defined, for example, by a frame with feet of the cutting system, which feet are adapted to be standing on the floor of a workshop. In the cutting section the first conveyor belt defines a moving workbench to which a continuous web of fibre fabric is supplied. The web of fibre fabric is transported by the first conveyor belt moving in the first conveying direction along the cutting section and past a cutting unit. The term "web of fibre fabric" or "web" as it is used herein is not restricted to a woven fabric. It includes any kind of semi-finished flexible product or semi-finished textile product that may be used as reinforcement in a composite material e.g. non-woven fibre fabric.

The cutting unit or cutter is arranged to cut the web along the cutting section into sheets or plies or patches of varying sizes. The sheets are then transported onwards on a first transport path that is formed by the first and the second curved path, respectively. Along the transport path the sheets are transported through a plurality of levels.

A level is a section of the transport path in which the sheets are supported against the gravitational force by one of the belts and are transported in a direction transversely to the vertical direction, e.g. horizontally. The levels are stacked one onto the other. The first level that is formed by the cutting section is, for example, on top of the second level which is, likewise, on top of the third level, and so on. However, it is also conceivable that the first level is arranged below the second level, which is in turn arranged below the third level. Thus, sheets transported along the first transport path through consecutive levels move either upwards or downwards in a defined vertical direction.

The sheets transported along the first transport path are supported on consecutive levels alternately by the first and the second conveyor belt. A sheet is supported by a conveyor belt when the conveyor belt is arranged below the sheet and the conveyor belt holds the sheet against the gravitational force. In the present embodiment of a cutting system the sheets lie on or are supported by the first conveyor belt on the first level, the second conveyor belt on the second level, again the first conveyor belt on the third level, and so on.

From the above it is obvious that the present application provides additional storage space for storing sheets cut by the cutting unit. The cutting system does advantageously not occupy any more space of a workshop floor than the cutting unit itself as consecutive levels are of the same size as the first level and neatly fit below or above the first level.

In a preferred embodiment the first transport path comprises a backhaul section. Sheets transported along the backhaul section of the transport path move from the last level to the first level and are clamped between the first and the second conveyor belt extending parallel to each other in the backhaul section. The backhaul section of the preferred embodiment allows transporting sheets that have been transported through all levels of the first transport path back to the first level or the cutting section of the cutting system. In an advantageous exemplary embodiment the cutting section is preferably on a working height and subsequent levels are arranged below the first level, such that the backhaul section transports sheets transported through all levels back into the working height from where they can be manually removed by an operator for further processing.

The backhaul section is formed by the first and the second curved path which are arranged along the backhaul section adjacent and parallel to one another such that sheets transported along the backhaul section are tightly held between the two conveyor belts such that they can ideally be moved in a vertical direction without immediate horizontal support. Hence, a backhaul section requires little additional space and facilitates an ergonomic working environment.

In an alternative preferred embodiment the fibre fabric cutting system comprises a second conveying assembly. The second conveying assembly includes a third endless conveyor belt guided in an endless loop along a third curved path and drivable to move in a third conveying direction along the third curved path. It further includes a fourth endless conveyor belt guided in an endless loop along a fourth curved path and drivable to move in a fourth conveying direction along the fourth curved path. The third and the fourth curved path are arranged such that when the third and the fourth conveyor belts are driven to move in the third and the fourth conveying directions, respectively, they cooperate to form a second transport path comprising a plurality of vertically spaced levels extending transversely to the vertical direction and arranged one above the other. Each level is defined by a section of at least one of the third and fourth curved path of the third and the fourth conveyor belts in which the respective conveyor belt extends transversely to the vertical direction. The sheets transported along the second transport path move from one level to the next level starting with a first level of the second transport path, wherein they are supported against the gravitational force alternately by the third and the fourth conveyor belt. The second conveying assembly is arranged adjacent to the first conveying assembly and the first level of the second transport path extends in extension of the last level of the first transport path such that sheets transported along the last level of the first transport path are transferred to the first level of the second transport path. Sheets transported along the first transport path vertically move in the opposite direction than sheets transported along the second transport path.

The second conveying assembly provides, similar to the first conveying assembly, a stack of multiple levels for transporting sheets cut in the cutting section along a second transport path. However, the sheets are transported in the opposite vertical direction. Hence, if the first transport path transports the sheets downwards, the second transport path transports the sheets back upwards again and vice versa. The second conveying assembly provides an alternative solution for transporting sheets back to a working height from where they can be manually removed for further processing.

Using a plurality of levels in a second conveying assembly further increases the storage capacity but occupies only little additional space in a workshop compared to the overall gained storage capacity. It is advantageous to form the second conveying assembly from a third and a fourth conveyor belt as this provides a modular setup of the cutting system. If a smaller component shall be produced which requires only a limited number of sheets that can all be stored along the first transport path the second conveying assembly can e.g. be moved aside and stored in a storage space or room. However, if more sheets are required than can be stored along the first transport path the second conveying assembly can be arranged adjacent to the first conveying assembly. The second conveying assembly takes over the sheets that have been transported from the first to the last level of the first transport path and provides additional storage space on further levels.

In a preferred embodiment at least one conveyor belt is formed from a porous material.

Preferably, a vacuum is applied to at least one conveyor belt formed from a porous material along at least one level of the plurality of levels for adhering sheets transported along the at least one level to the at least one conveyor belt formed from a porous material. In the preferred embodiment at least one of the conveyor belts is made from a porous material. A vacuum applied to a porous conveyor belt can take effect through the belt. Hence, sheets transported on the conveyor belt are drawn to the belt by the vacuum and, thereby, securely held in position while they are transported along the first and/or the second transport path.

It is further preferred to apply heat to at least one conveyor belt along at least one level of the plurality of levels for heating sheets transported along said at least one level. Heating the conveyor belt and thereby the sheets can advantageously be used to activate a binder on the fibre fabric sheets, for example.

In a preferred embodiment the first and the second curved path are arranged such that sheets transported along the first transport path are clamped between the first and the second conveyor belt when moving from one level to the next level and/or the first and the second curved path are arranged such that sheets transported along a level of the first transport path are clamped between the first and the second conveyor belt.

In an exemplary embodiment of a cutting system that comprises the second conveying assembly according to the present invention the third and the fourth curved path are arranged such that sheets transported along the second transport path are clamped between the third and the fourth conveyor belt when moving from one level to the next level and/or the third and the fourth curved path are arranged such that sheets transported along a level of the second transport path are clamped between the third and the fourth conveyor belt.

It is advantageous to arrange the curved paths of the conveying assemblies such that the sheets are securely held by both conveyor belts at the same time when moving from one level to the next level. Thus, the sheets stay flat and do not wrinkle or accidently turn over. Likewise, the curved paths are advantageously also arranged along at least some levels to securely hold sheets transported along said levels in position and ensure that the sheets stay flat and free of wrinkles.

It is further preferred that between any two consecutive levels of the first transport path the first and the second conveyor belt are guided about at least one roller. The first and the second conveyor belt are preferably fed or directed about the same rollers to ensure that the sheets are tightly held by two conveyor belts while moving from one level to the next level to avoid any damage of the sheets or a jamming of the sheets in the conveying assembly.

In an exemplary embodiment of a cutting system comprising a second conveying assembly according to the present invention any two consecutive levels of the second transport path the third and the fourth conveyor belt are guided about at least one roller.

In a preferred embodiment between two consecutive levels of the first transport path the first and the second conveyor belt are guided about two rollers vertically spaced from one and another by a vertical distance, wherein the two rollers are adapted such that the vertical distance can be modified for adjusting a tension of the first and the second conveyor belts. In an exemplary embodiment of a cutting system that comprises a second conveying assembly according to the present invention the third and the fourth conveyor belts are guided about two rollers vertically spaced from one another by a vertical distance between consecutive levels of the second transport path, wherein the two rollers are adapted such that the vertical distance can be modified for adjusting a tension of the third and fourth conveyor belt.

Preferably, the first and/or the second conveying belt are guided about a movable tensioning roller that can be moved for adjusting a tension of the first and/or the second conveyor belt. In an exemplary embodiment of a cutting system that comprises a second conveying assembly, the third and/or the fourth conveying belt are preferably guided about a movable tensioning roller that can be moved for adjusting a tension of the third and/or the fourth conveyor belt.

In the preferred embodiment the conveyor belts are directed about two or more rollers between subsequent levels. Two of these rollers are spaced by a vertical distance and the vertical distance of the rollers can be adjusted. A vertical distance of two rollers is defined as the distance in a direction parallel to the direction in which gravity acts. The distance of two rollers can be measured e.g. between the centres of the rollers. By adjusting the vertical distance of the rollers the length of the transport path and, thereby, the tension of the conveyor belts is modified. Thus, sheets of different thickness can be transported along the same transport path. If thicker sheets shall be transported along a transport path, the rollers are moved closer together such that the conveyor belts are less tight and have more slack. Vice versa, if thinner sheets shall be transported along the same transport path, the rollers are moved further apart from one another, the conveyor belts are tightened and thin sheets that might otherwise slip in between two levels or e.g. while transported up a backhaul section are tightly held between the conveyor belts. Preferably, tensioning rollers are provided along the curved paths that can be moved perpendicular to a direction of the respective paths. A tensioning roller can be used to adjust a tension of a conveying belt i.e. to remove slack out of the conveying belt if the distance between two movable rollers was reduced to accommodate thicker sheets. Vice versa, the tension of a conveying belt can be reduced by moving a tensioning roller if two rollers have been moved further apart for securely holding thinner sheets.

In a preferred embodiment the cutting system comprises a binder application unit that is arranged and adapted for applying binder to sheets transported along the first or, in an exemplary embodiment comprising the second conveying assembly, the second transport path. Binder is used to adhere two sheets together that form adjacent layers of a composite material.

A preferred embodiment of a binder application unit comprises a binder belt disposed adjacent to the first conveying assembly. The binder belt is guided in an endless loop along a curved binder path and drivable to move in binding direction along the curved binder path. The binder application unit further comprises a binder spraying unit adapted to receive a binder and operable to spray binder onto the binder belt. For applying binder to sheets transported along the first transport path, the sheets are clamped between the binder belt, which is moving in the binding direction and onto which binder has been sprayed by the binder spraying unit, and one of the first or the second conveyor belt such that binder spayed onto the binder belt by the binder spraying unit is transferred from the binder belt to the sheets.

The preferred binder application unit comprises an additional binder belt that is used for applying binder to sheets transported along the first transport path. The binder is sprayed onto the binder belt and not directly onto the sheets. From the binder belt the binder is transferred to sheets that are tightly clamped or squeezed between the binder belt and another conveyor belt. Thereby, the sheets are infused or impregnated with binder and not just superfluously covered. Hence, a sheet that has been impregnated with binder by a binder application unit according to the present embodiment will adhere more robustly to an adjacent layer of the reinforcement of a composite material.

In a preferred embodiment the binder application unit comprises a thermal activation unit for heating sheets to which binder has been applied. Some binder can be activated by heat. Hence, activated sheets can be immediately processed further as reinforcement of a composite material. No external additional heating unit is required to activate the binder.

In another aspect the problem is solved by a method of cutting a fibre fabric using a fibre fabric cutting system according to the present invention. The method comprises the steps of:
- supplying a web of fibre fabric to the cutting section while the first conveyor belt moves in the first conveying direction,
- transporting the web of fibre fabric supplied by the fibre fabric supply unit by the first conveyor belt in the first conveying direction,
- cutting the web of fibre fabric transported by the first conveyor belt into sheets with the cutting unit,
- transporting the sheets along the first transport path while the first and the second conveyor belts are moved in the first and the second conveying directions, respectively.

A preferred embodiment of the method uses a fibre fabric cutting system according to preferred embodiments of the present invention comprising a second conveying assembly. The method further comprises the step of:
- Transporting the sheets along the second transport path while the third and fourth conveyor belts move in the third and the fourth conveying directions, respectively.

It is further preferred that the method of cutting a fibre fabric uses a fibre fabric cutting system according to preferred embodiments of the present invention in which the fibre fabric cutting system comprises a binder application unit. The preferred method further comprises the step of:
- applying binder to sheets transported along the first transport path using the binder application unit.

The methods according to the present invention are advantageous for the same reasons as the embodiments of the respective fibre fabric cutting systems.

Exemplary embodiments of a fibre fabric cutting system according to the present invention will now be described with reference to the drawings wherein
- Fig. 1: is a schematic view of a first exemplary embodiment of a fibre fabric cutting system according to the present invention,
- Fig. 2: is a schematic view of a second exemplary embodiment of a fibre fabric cutting system according to the present invention comprising a backhaul section,
- Fig. 3: is a schematic view of a third exemplary embodiment of a fibre fabric cutting system according to the present invention comprising a first and a second conveying assembly,
- Fig. 4: is a schematic view of a section of a fourth exemplary embodiment of a fibre fabric cutting system according to the present invention,
- Fig. 5a: is a schematic view of a fifth exemplary embodiment of a fibre fabric cutting system according to the present invention,
- Fig. 5b: is another schematic view of the embodiment of Fig. 5a and
- Fig. 6: is a schematic view of a section of a sixth exemplary embodiment of fibre fabric cutting assembly according to the present invention comprising a binder application unit.

The invention will now be described with reference to the Figures showing six exemplary embodiments of fibre fabric cutting systems according to the present invention. In the Figures like numerals refer to like elements.

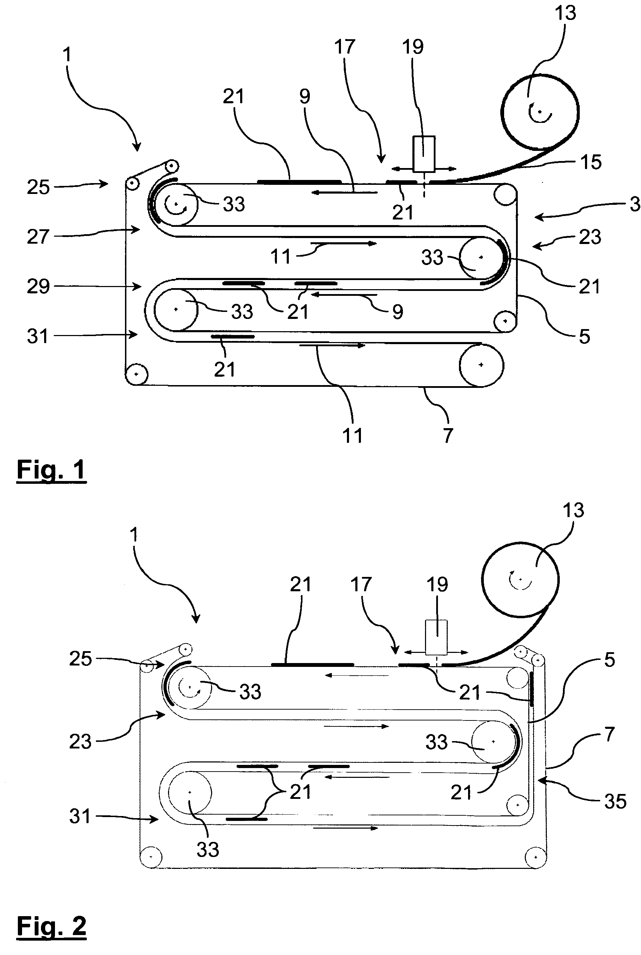

Fig. 1 shows a first embodiment of the present invention. The fibre fabric cutting system 1 comprises a first conveying assembly 3 having a first and a second endless conveyor belt 5, 7. The first and the second conveyor belt 5, 7 are guided in endless loops along a first and a second curved path, respectively. The belts 5, 7 are drivable to move in a first and a second conveying direction 9, 11, respectively, along the respective curved paths. A conveying direction 9, 11 only reflects the direction in which a conveyor belt 5, 7 moves about its curved path. Hence, each conveyor belt 5, 7 can only move in two different conveying directions 9, 11.

The fibre fabric cutting system 1 further comprises a fibre fabric supply unit 13. The fibre fabric supply unit 13 is adapted to receive a web of fibre fabric 15 and to supply the web 15 to the first conveying assembly 3. In Fig. 1 the fibre fabric supply unit 13 is shown as a simple roll with a web of fibre fabric 15.

The web 15 is supplied to a cutting section 17 of the curved path of the first conveyor belt 5. In the cutting section 17 the first conveyor belt 5 extends in a horizontal direction or perpendicular to the direction in which gravity acts. If the first conveyor belt 5 is driven in the first conveying direction 9, the continuous web 15 moves along the cutting section 17 and past a cutting unit 19 disposed near the cutting section 17. The cutting unit 19 can be operated to cut the web 15 into sheets 21 of different sizes. To this end, the cutting section 17 of the first conveyor belt 5 serves as a moving workbench on which the continuous web 15 is cut into smaller sheets 21 to be used for manufacturing a composite material.

The sheets 21 are then transported by the first conveying assembly 3 on a first transport path 23. The first transport path 23 is formed by the first and the second conveyor belt 5, 7 while they are driven to move in the first and second conveying directions 9, 11, respectively.

The transport path 23 defines a plurality of horizontally extending levels 25, 27, 29, 31. The levels 25, 27, 29, 31 are vertically spaced from one another. Between consecutive levels 25, 27, 29, 31 the first and second conveyor belts 5, 7 are fed or guided about rollers 33. In the embodiment shown in Fig. 1, the belts 5, 7 are only guided about a single roller 33 between consecutive levels 25, 27, 29, 31. However, the belts 5, 7 can also be guided about two or more rollers 33 between consecutive levels 25, 27, 29, 31.

The cutting section 17 forms part of the first level 25 of the transport path 23. Sheets 21 cut in the cutting section 17 are supported along the first level 25 by the first conveyor belt 5. When the first and the second conveyor belts 5, 7 move in their respective conveying directions 9, 11, the sheets 21 are transported from the first level 25 or the cutting section 17 to consecutive levels 27, 29, 31 i.e. they move from one level 25, 27, 29 to the next level 27, 29, 31. On consecutive levels 25, 27, 29, 31 the sheets 21 are supported by alternating conveyor belts 5, 7. On the first level 25 the sheets 21 are supported by the first conveyor belt 5. On the second level 27 the sheets 21 are supported against the gravitational force by the second conveyor belt 7. On the third level 29 the sheets 21 are supported by the first conveyor belt 5 again, and so on. While the embodiment shown in Fig. 1 only comprises four levels 27, 27, 29, 31, a fibre fabric cutting assembly 1 comprising more or less than four levels 27, 27, 29, 31 is within the scope of the present invention.

The fibre fabric cutting assembly 1 shown in Fig. 1 provides an advantageous storage space for storing sheets 21 that have been cut by a cutting unit 19 from a continuous web 15. The cutting system 1 requires no extra space on a shop floor compared to a cutting system comprising only a single cutting section and no further levels.

In the first embodiment the first and the second curved path are arranged such that sheets 21 transported between consecutive levels 25, 27, 29, 31 are clamped or tightly held between the first and the second conveyor belt 5, 7. Thereby, the sheets 21 advantageously remain flat and do not wrinkle or fold while being transported in a vertical direction. Likewise, sheets 21 transported along some of the levels 27, 29, 31 are tightly held or clamped between the first and the second conveyor belt 5, 7 such that they are securely held in the conveying assembly 3. A sheet 21 clamped between two conveyor belts 5, 7 is in planar contact with those conveyor belts 5, 7. Thus, when sheets 21 are transported in the vertical direction, i.e. while no belt 5, 7 is arranged below the sheets 21 and supports them against the gravitational force, the friction between the belts 5, 7 and the sheets 21 will hold the sheets 21 flat and in position.

In Fig. 1 the levels 25, 27, 29, 31 are arranged one on top of the other. The first level 25 is arranged on top of the second level 27 which is arranged on top of the third level 29. Hence, all other levels 25, 27, 29 are arranged above the last level 31. In other words, sheets 21 transported along the first transport path 23 move in a downward vertical direction from the first level 25 to the last level 31. In other exemplary embodiments of the present invention the first level 25 could be arranged below all other levels 27, 29, 31 and the last level 31 could be on top of all other levels 25, 27, 29.

Fig. 2 shows a second embodiment of a fibre fabric cutting system 1 according to the present invention. Only those elements of the second embodiment that differ from the embodiment shown in Fig. 1 will be described here in more detail.

In the second embodiment the first and second curved path formed by the first and second conveyor belt 5, 7, respectively, are arranged to form a first transport path 23 that comprises a backhaul section 35. Sheets 21 transported along the backhaul section 35 move from the last level 31 to the first level 25 of the first transport path 23 though the first and second belt 5, 7 are moving in the first and second conveying direction 9, 11, respectively. With the backhaul section 35 the first transport path 23 forms a close loop on which sheets 21 can be transported.

Sheets 21 cut in the cutting section 17 are transported through all levels 25, 27, 29, 31 from the first level 25 to the last level 31 and back along the backhaul section 35 to the first level 25. From the first level 25 the sheets can be easily removed by an operator of the cutting system 1 as the first level 25 can conveniently be arranged at a working height. In the backhaul section 35 the sheets 21 are tightly clamped between the first and the second conveyor belt 5, 7 such that the friction between the sheets 21 and the conveyor belts 5, 7 prevents the sheets 21 from slipping due to the influence of gravity in a downward direction while being transported upwards.

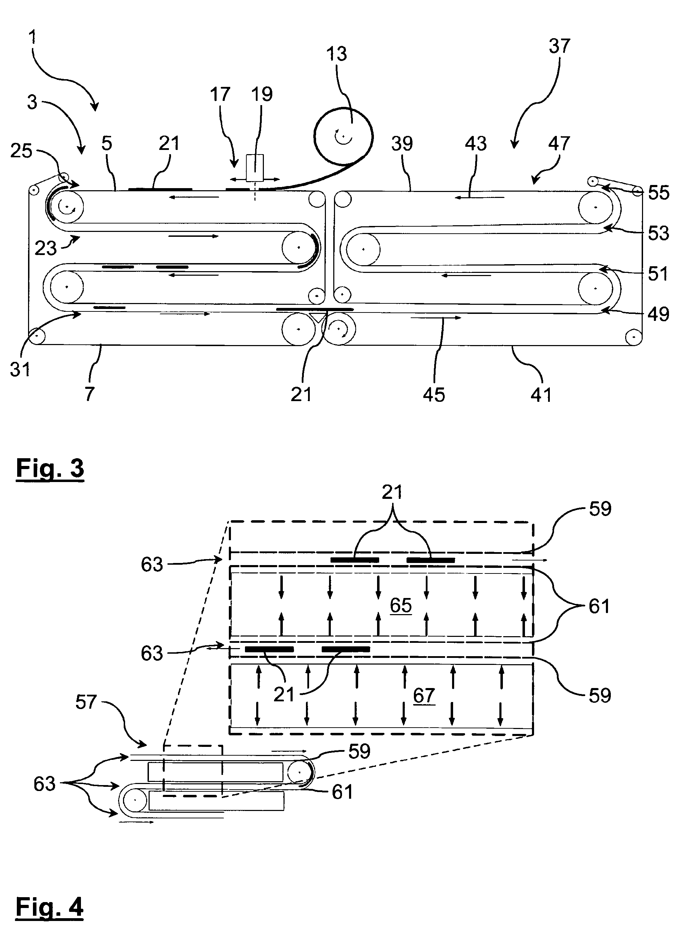

A third exemplary embodiment of a fibre fabric cutting system 1 is shown in Fig. 3. In Fig. 3 a second conveying assembly 37 is arranged adjacent to the first conveying assembly 3. The second conveying assembly 37 comprises a third and a fourth conveyor belt 39, 41. The third and fourth conveyor belts 39, 41 are guided along third and fourth curved paths, respectively, and drivable to move in a third and a fourth conveying direction 43, 45, respectively. The third and fourth curved paths are arranged to form a second transport path 47 for sheets 21 cut by the cutting unit 19. The second transport path 47 comprises a plurality of levels 49, 51, 53, 55. Along the levels 49, 51, 53, 55 the respective conveyor belts 39, 41 extend in the horizontal direction and sheets 21 moving along the levels 49, 51, 53, 55 are supported by one of the transport belts 39, 41. Sheets 21 transported along the second transport path 47 move from one level 49, 51, 53 to the next level 51, 53, 55 and are supported on consecutive levels 49, 51, 53, 55 by alternating conveyor belts 39, 41.

The first level 49 of the second transport path 47 is arranged such that sheets 21 transported by the last level 31 of the first transport path 23 can be received by the first level 49 of the second transport path 47. The sheets 21 received by the first level 49 are then transported in the opposite vertical direction along the second transport path 47 then they were transported on the first transport path 23. In other words, in the first conveying assembly 3 the first level 25 is arranged on top of all other levels 27, 29, 31. Sheets 21 transported from the first to the last level 25, 31 of the first transport path 23 move in a downward direction. Along the second transport path 47 sheets 21 transported from the first level 49 to the last level 55 move upwards. The first level 49 is arranged below the second level 51 which is in turn arranged below the third level 53, and so on. In the preferred embodiment shown in Fig. 3 the last level 55 of the second conveying assembly 37 is on the same vertical height as the first level 25 of the first conveying assembly 3. Assuming that these levels 25, 55 are on a height that can be easily accessed by an operator of the cutting system 1 the last level 55 of the second conveying assembly 37 is an ergonomic position for manually removing sheets 21 out of the fibre fabric cutting system 1.

The third embodiment shown in Fig. 3 is very flexible as the second conveying assembly 37 is advantageously designed as being removable when not required. Hence, if the fibre fabric cutting system 1 is used to cut more sheets 21 than can be stored along the first transport path 23, the second conveying assembly 37 is arranged adjacent to the first conveying assembly 3 and provides additional storage space. However, if only few sheets 21 shall be cut from the continuous web 15 at a time and these sheets can all be stored along the first transport path 23, the second conveying assembly 37 can be moved away and e.g. stored in a storage space.

Fig. 4 shows a section of a transport path 57 of a fourth exemplary embodiment of a fibre fabric cutting system 1 according to the present invention. The transport path 57 is formed by the curved paths of two conveyor belts 59, 61 forming three levels 63. As can be seen in an enlarged view of the transport path 57, the conveyor belts 59, 61 are made from a porous material. In between the upper two levels 63 a vacuum 65 is applied to the conveyor belt 61 to adhere sheets 21 transported along the transport path 57 to the conveyor belt 61. The vacuum 65 acts through the porous conveyor belt 61 and securely attaches the sheets 21 to the conveyor belt 61.

Between the following levels 63 heat 67 is applied to the conveyor belt 59. The heat 67 either acts on the sheets 21 transported along the heated levels 63 directly through the pores in the conveyor belt 59 or by heating the conveyor belt 59. The heat 67 can, for example, activate a binder on the sheets 21.

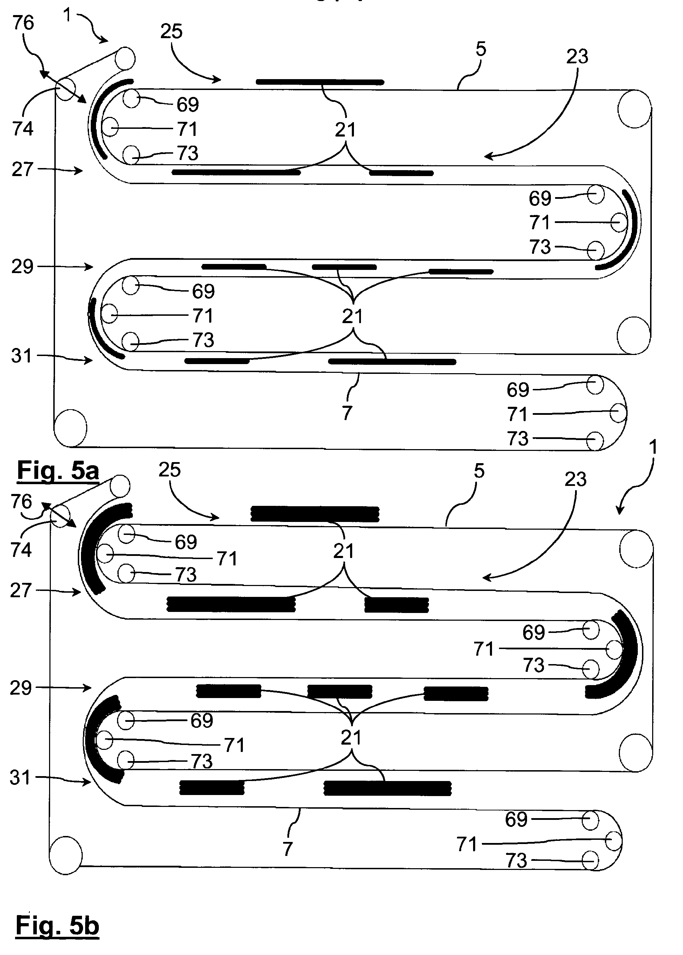

In Figs. 5a and 5b a fifth embodiment of a fibre fabric cutting system 1 is shown. The cutting system 1 comprises a cutting unit and a fibre fabric supply unit that are, however, not shown in Figs. 5a and 5b. In the fifth embodiment the first conveyor belt 5 and the second conveyor belt 7 are each guided about three rollers 69, 71, 73 between consecutive levels 25, 27, 29, 31. Two of these rollers 69, 73 are vertically spaced by a vertical distance. The vertical distance of the two rollers 69, 73 can be adjusted to alter the tension of the conveyor belts 5, 7 to accommodate sheets 21 of different thicknesses in the conveying assembly 3. In Fig. 5a thin sheets 21 are transported along the transport path 23 and the two rollers 69, 73 are spaced apart further than in Fig. 5b in which thicker sheets 21 are transported along the transport path 23.

The embodiment shown in Figs. 5a and 5b further comprises a movable tensioning roller 74. The second conveyor belt 7 is guided about the tensioning roller 74, which can be moved in a direction 76 transverse and preferably perpendicular to the direction in which the second conveyor belt 7 moves about the tensioning roller 74. The tensioning roller 74 can be moved to adjust a tension of the second conveyor belt 7, i.e. to tighten the second conveyor belt 7 when the rollers 69, 73 have been moved closer together to accommodate thicker sheets 21 (Fig. 5b) and to add slack or to loosen the second conveyor belt 7 when the rollers 69, 73 have been moved further apart to securely hold thinner sheets 21 (Fig. 5a).

Hence, in the fifth embodiment it is advantageously assured that thinner sheets 21 are safely held between the first and the second conveyor belt 5, 7 by tensioning the belts 5, 7 and thicker sheets 21 as shown in Fig. 5b can also be processed by the cutting system 1.

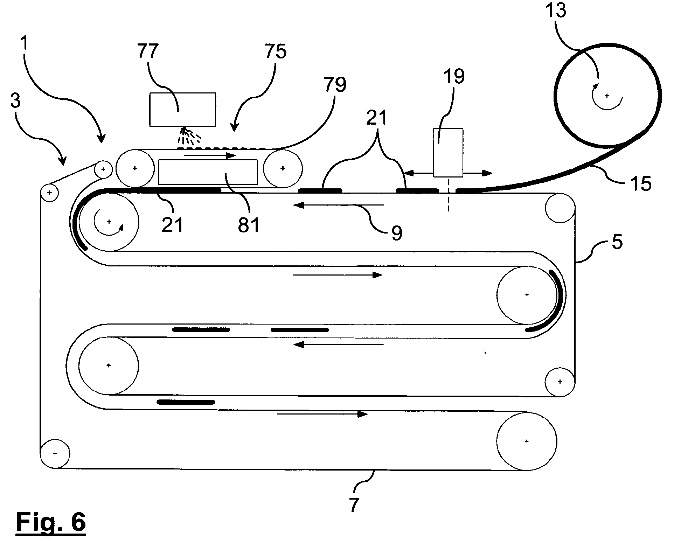

Finally, in Fig. 6 a sixth embodiment of a fibre fabric cutting system 1 according to the present invention is shown that comprises a binder application unit 75. The binder application unit 75 can be used to apply a binder to sheets 21 transported on the first conveying assembly 3. The binder application unit 75 comprises a binder spraying unit 77 spraying binder onto a binder belt 79. The binder belt 79 is an endless belt guided on an endless binding path. The binding path is arranged adjacent to the first curved path of the first conveyor belt 5 such that sheets 21 that have been cut by the cutting unit 19 from the continuous web of fibre fabric 15 are clamped between the binder belt 79 and the first conveyor belt 5.

While the sheets 21 pass through the narrow gap between the binder belt 79 and the first conveyor belt 5, binder that has been sprayed onto the binder belt 79 is transferred from the binder belt 79 to the sheets 21. Preferably, the sheets 21 are tightly squeezed between the binder belt 79 and the first conveyor belt 5 such that the sheets 21 are impregnated or infused by binder. Thereby, it is ensured that the binder is thoroughly connected to the sheets 21 and a stable or ridged connection between successive layers of the reinforcement of a composite material produced from the sheets 21 is obtained.

The binder application unit 75 further preferably comprises a thermal activation unit 81 for heating sheets 21 to which binder has been applied. Sheets 21 with activated binder on them can be immediately processed further to form the reinforcement of a composite material.

## Claims

1. A fibre fabric cutting system (1) comprising
a first conveying assembly (3) including a first endless conveyor belt (5) guided in an endless loop along a first curved path and drivable to move in a first conveying direction (9) along the first curved path, the first curved path comprising a cutting section (17) in which, in an operating position of the fibre fabric cutting system (1), the first conveyor belt (5) extends in the horizontal direction,
a fibre fabric supply unit (13) adapted to receive a web of fibre fabric (15) and operable to supply the web (15) to the cutting section (17) such that when the first conveyor belt (5) is moved in the first conveying direction (9) the web (15) is transported by the first conveyor belt (5) along the cutting section (17), and
a cutting unit (19) disposed near the cutting section (17) and adapted to be operable to cut a web of fibre fabric (15) into sheets (21), which web (15) is supplied to the cutting section (17) by the fibre fabric supply unit (13) and transported by the first conveyor belt (5) when moving into the first conveying direction (9),
**characterized in that**
the first conveying assembly (3) further includes a second endless conveyor belt (7) guided in an endless loop along a second curved path and drivable to move in a second conveying direction (11) along the second curved path, wherein
the first curved path and the second curved path are arranged such that when the first and second conveyor belts (5, 7) are driven to move in the first and second conveying directions (9, 11), respectively, they cooperate to define for sheets (21) cut by the cutting unit (19) a first transport path (23) comprising a plurality of vertically spaced levels (25, 27, 29, 31, 63) extending transversely to the vertical direction and arranged one above the other,
the cutting section (17) defines the first level (25) and each of the subsequent levels (27, 29, 31, 63) is defined by a section of at least one of the first and second curved paths of the first and the second conveyor belts (5, 7) in which the respective conveyor belt (5, 7) extends in a direction transversely to the vertical direction, and
sheets (21) transported along the first transport path (23) move from one level (25, 27, 29, 63) to the next level (27, 29, 31, 63) starting with the first level (25), wherein they are supported alternately against the gravitational force by the first and the second conveyor belt (5, 7) on consecutive levels (25, 27, 29, 31, 63).

2. A fibre fabric cutting system (1) according to claim 1, **characterized in that** the first transport path (23) comprises a backhaul section (35), wherein sheets (21) transported along the backhaul section (35) of the first transport path (23) move from the last level (31) to the first level (25) and wherein sheets (21) transported along the backhaul section (35) are clamped between the first and the second conveyor belt (5, 7) extending parallel to each other in the backhaul section (35).

3. A fibre fabric cutting system (1) according to claim 1, **characterized in that** the fibre fabric cutting system (1) comprises a second conveying assembly (37) including
a third endless conveyor belt (39) guided in an endless loop along a third curved path and drivable to move in a third conveying direction (43) along the third curved path and
a fourth endless conveyor belt (41) guided in an endless loop along a fourth curved path and drivable to move in a fourth conveying direction (45) along the fourth curved path,
wherein the third and the fourth curved path are arranged such that when the third and the fourth conveyor belts (39, 41) are driven to move in the third and the fourth conveying directions (43, 45), respectively, they cooperate to form a second transport path (47) comprising a plurality of vertically spaced horizontally extending levels (49, 51, 53, 55) arranged one above the other,
wherein each level (49, 51, 53, 55) is defined by a section of at least one of the third and fourth curved paths of the third and the fourth conveyor belts (39, 41) in which the respective conveyor belt (39, 41) extends in a direction transversely to the vertical direction and
wherein the sheets (21) transported along the second transport path (47) move from one level (49, 51, 53) to the next level (51, 53, 55) starting with a first level (49) of the second transport path (47), wherein they are supported alternately by the third and the fourth conveyor belt (39, 41),
wherein the second conveying assembly (37) is arranged adjacent to the first conveying assembly (3) and the first level (49) of the second transport path (47) extends in extension of the last level (31) of the first transport path (23) such that sheets (21) transported along the last level (31) of the first transported path (23) are transferred to the first level (49) of the second transport path (47),
wherein sheets (21) transported along the first transport path (23) vertically move in the opposite direction than sheets (21) transported along the second transport path (47).

4. A fibre fabric cutting system (1) according to any of the preceding claims, **characterized in that** at least one of the conveyor belts (59, 61) is formed from a porous material.

5. A fibre fabric cutting system (1) according to claim 4, **characterized in that** a vacuum (65) is applied to the at least one conveyor belt (59, 61) formed from a porous material along at least one level (63) of the plurality of levels (63) for adhering sheets (21) transported along said at least one level (63) to the at least one conveyor belt (59, 61) formed from a porous material.

6. A fibre fabric cutting system (1) according to any of the preceding claims, **characterized in that** heat (67) is applied to at least one of the conveyor belts (59, 61) along at least one level (63) of the plurality of levels (63) for heating sheets (21) transported along said at least one level (63).

7. A fibre fabric cutting system (1) according to any of the preceding claims, **characterized in that** the first and the second curved path are arranged such that sheets (21) transported along the first transport path (23) are clamped between the first and the second conveyor belt (5, 7) when moving from one level (25, 27, 29, 63) to the next level (27, 29, 31, 63) and/or
that the first and the second curved path are arranged such that sheets (21) transported along a level (27, 29, 31, 63) of the first transport path (23) are clamped between the first and the second conveyor belt (5, 7).

8. A fibre fabric cutting system (1) according to any of the preceding claims, **characterized in that** between any two consecutive levels (25, 27, 29, 31) of the first transport path (23) the first and the second conveyor belt (5, 7) are guided about at least one roller (33, 69, 71, 73).

9. A fibre fabric cutting system (1) according to claim 8, **characterized in that** between two consecutive levels (25, 27, 29, 31) of the first transport path (23) the first and the second conveyor belt (5, 7) are guided about two rollers (69, 73) vertically spaced from one another by a vertical distance, wherein the two rollers (69, 73) are adapted such that the vertical distance can be modified for adjusting a tension of the first and the second conveyor belt (5, 7)
wherein the first and/or the second conveying belt (5, 7) are preferably guided about a movable tensioning roller (74) that can be moved for adjusting a tension of the first and/or the second conveyor belt (5, 7).

10. A fibre fabric cutting system (1) according to any of the preceding claims, **characterized in that** a binder application unit (75) is provided that is arranged and adapted for applying binder to sheets (21) transported along the first transport path (23).

11. A fibre fabric cutting system (1) according to claim 10, **characterized in that** the binder application unit (75) comprises a binder belt (79) disposed near the first conveying assembly (3), guided in an endless loop along a curved binder path and drivable to move in a binding direction along the curved binder path and
a binder spraying unit (77) adapted to receive a binder and operable to spray binder onto the binder belt (79),
wherein for applying binder to sheets (21) transported along the first transport path (23), the sheets (21) are clamped between the binder belt (79), which is moving in the binding direction and onto which binder has been sprayed by the binder spraying unit (77), and one of the first or the second conveyor belt (5, 7) such that binder is transferred from the binder belt (79) to the sheets (21).

12. A fibre fabric cutting system according to claims 10 or 11, **characterized in that** the binder application unit (75) comprises a thermal activation unit (81) for heating sheets (21) to which binder has been applied.

13. A method of cutting a fibre fabric using a fibre fabric cutting system (1) according to any of the preceding claims, comprising the steps of:
- supplying a web of fibre fabric (15) to the cutting section (17) of the first curved path by the fibre fabric supply unit (13) while the first conveyor belt (5) is moving in the first conveying direction (9),
- transporting the web of fibre fabric (15) supplied by the fibre fabric supply unit (13) by the first conveyor belt (5) in the first conveying direction (9),
- cutting the web of fibre fabric (15) transported by the first conveyor belt (5) into sheets (21) with the cutting unit (19),
- transporting the sheets (21) along the first transport path (23) while the first and the second conveyor belts (5, 7) are moved in the first and second conveying directions (9, 11), respectively.

14. A method of cutting a fibre fabric according to claim 13 wherein the fibre fabric cutting system (1) is a fibre fabric cutting system (1) according to claim 3, further comprising the step of:
- transporting the sheets along the second transport path (47) while the third and the fourth conveyor belts (39, 41) are moved in the third and fourth conveying directions (43, 45), respectively.

15. A method of cutting a fibre fabric according to claim 13 or 14 wherein the fibre fabric cutting system (1) is a fibre fabric cutting system (1) according to any of claims 10 to 12, further comprising the step of:
- applying binder to sheets (21) transported along the first transport path (23) using the binder application unit (75).

## Patentansprüche

1. Faserstoff-Schneidsystem (1), das
eine erste Transportanordnung (3), die ein erstes Endlostransportband (5) aufweist, das in einer Endlosschleife entlang eines ersten gekrümmten Weges geführt ist und angetrieben werden kann, um sich in einer ersten Transportrichtung (9) entlang des ersten gekrümmten Weges zu bewegen, wobei der erste gekrümmte Weg einen Schneidabschnitt (17) aufweist, in dem sich in einer Betriebsposition des Faserstoff-Schneidsystems (1) das erste Transportband (5) in der horizontalen Richtung erstreckt,
eine Faserstoff-Zuführeinheit (13), die angepasst ist, um eine Bahn von Faserstoff (15) zu empfangen und betrieben werden kann, um die Bahn (15) dem Schneidabschnitt (17) in der Weise zuzuführen, dass dann, wenn das erste Transportband (5) in der ersten Transportrichtung (9) bewegt wird, die Bahn (15) von dem ersten Transportband (5) entlang des Schneidabschnitts (17) bewegt wird, und
eine Schneideinheit (19) aufweist, die in der Nähe des Schneidabschnitts (17) angeordnet und angepasst ist, um betrieben werden zu können, um eine Bahn von Faserstoff (15) in Abschnitte (21) zu schneiden, wobei die Bahn (15) dem Schneidabschnitt (17) durch die Faserstoff-Zuführeinheit (13) zugeführt und von dem ersten Transportband (5) transportiert wird, wenn es sich in die erste Transportrichtung (9) bewegt,
**dadurch gekennzeichnet, dass**
die erste Transportanordnung (3) ferner ein zweites Endlostransportband (7) aufweist, das in einer Endlosschleife entlang eines zweiten gekrümmten Weges geführt ist und angetrieben werden kann, um sich in einer zweiten Transportrichtung (11) entlang des zweiten gekrümmten Weges zu bewegen, wobei
der erste gekrümmte Weg und der zweite gekrümmte Weg in der Weise angeordnet sind, dass das erste und das zweite Transportband (5, 7) dann, wenn sie angetrieben werden, um sich in der ersten bzw. der zweiten Transportrichtung (9, 11) zu bewegen, zusammenwirken, um für durch die Schneideinheit (19) geschnittenen Abschnitte (21) einen ersten Transportweg (23) zu definieren, der eine Vielzahl von vertikal beabstandeten Ebenen (25, 27, 29, 31, 63) aufweist, die sich quer zu der vertikalen Richtung erstrecken und übereinander angeordnet sind,
der Schneidabschnitt (17) die erste Ebene (25) definiert und jede der nachfolgenden Ebenen (27, 29, 31, 63) durch einen Abschnitt von zumindest einem des ersten und des zweiten gekrümmten Weges des ersten und des zweiten Transportbandes (5, 7) definiert ist, in dem sich das jeweilige Transportband (5, 7) in einer Richtung quer zu der vertikalen Richtung erstreckt, und
Abschnitte (21), die entlang des ersten Transportweges (23) transportiert werden, sich beginnend mit der ersten Ebene (25) von einer Ebene (25, 27, 29, 63) zu der nächsten Ebene (27, 29, 31, 63) bewegen, wobei sie auf aufeinander folgenden Ebenen abwechselnd von dem ersten und dem zweiten Transportband (5, 7) gegen die Gravitationskraft abgestützt werden.

2. Faserstoff-Schneidsystem (1) nach Anspruch 1, **dadurch gekennzeichnet, dass** der erste Transportweg (23) einen Rücktransportabschnitt (35) aufweist, wobei sich Abschnitte (21), die entlang des Rücktransportabschnitts (35) des ersten Transportweges (23) transportiert werden, von der letzten Ebene (31) zu der ersten Ebene (25) bewegen und wobei Abschnitte (21), die entlang des Rücktransportabschnitts (35) transportiert werden, zwischen dem ersten und dem zweiten Transportband (5, 7) eingeklemmt sind, die sich in dem Rücktransportabschnitt (35) parallel zueinander erstrecken.

3. Faserstoff-Schneidsystem (1) nach Anspruch 1, **dadurch gekennzeichnet, dass** das Faserstoff-Schneidsystem (1) eine zweite Transportanordnung (37) aufweist, die
ein drittes Endlostransportband (39), das in einer Endlosschleife entlang eines dritten gekrümmten Weges geführt ist und angetrieben werden kann, um sich in einer dritten Transportrichtung (43) entlang des dritten gekrümmten Weges zu bewegen, und
ein viertes Endlostransportband (41) aufweist, das in einer Endlosschleife entlang eines vierten gekrümmten Weges geführt ist und angetrieben werden kann, um sich in einer vierten Transportrichtung (45) entlang des vierten gekrümmten Weges zu bewegen,
wobei der dritte und der vierte gekrümmte Weg in der Weise angeordnet sind, dass das dritte und das vierte Transportband (39, 41) dann, wenn sie angetrieben werden, um sich in der dritten bzw. der vierten Transportrichtung (43, 45) zu bewegen, zusammenwirken, um einen zweiten Transportweg (47) zu definieren, der eine Vielzahl von vertikal beabstandeten und sich horizontal erstreckenden Ebenen (49, 51, 53, 55) aufweist, die übereinander angeordnet sind,
wobei jede Ebene (49, 51, 53, 55) durch einen Abschnitt von zumindest einem des dritten und des vierten gekrümmten Weges des dritten und des vierten Transportbandes (39, 41) definiert ist, in dem sich das jeweilige Transportband (39, 41) in einer Richtung quer zu der vertikalen Richtung erstreckt, und wobei die Abschnitte (21), die entlang des zweiten Transportweges (47) transportiert werden, sich beginnend mit einer ersten Ebene (49) des zweiten Transportweges (47) von einer Ebene (49, 51, 53) zu der nächsten Ebene (51, 53, 55) bewegen, wobei sie abwechselnd von dem dritten und dem vierten Transportband (39, 41) abgestützt werden,
wobei zweite Transportanordnung (37) benachbart zu der ersten Transportanordnung (3) angeordnet ist und sich die erste Ebene (49) des zweiten Transportweges (47) in Verlängerung der letzten Ebene (31) des ersten Transportweges (23) erstreckt, so dass Abschnitte (21), die entlang der letzten Ebene (31) des ersten Transportweges (23) transportiert werden, auf die erste Ebene (49) des zweiten Transportweges (47) übertragen werden,
wobei Abschnitt (21), die entlang des ersten Transportweges (23) transportiert werden, sich vertikal in der entgegengesetzten Richtung als Abschnitt (21) bewegen, die entlang des zweiten Transportweges (47) transportiert werden.

4. Faserstoff-Schneidsystem (1) nach einem der vorhergehenden Ansprüche, **dadurch gekennzeichnet, dass** zumindest eines der Transportbänder (59, 61) aus einem porösen Material ausgebildet ist.

5. Faserstoff-Schneidsystem (1) nach Anspruch 4, **dadurch gekennzeichnet, dass** entlang mindestens einer Ebene (63) der Vielzahl von Ebenen (63) ein Vakuum (65) an das zumindest eine Transportband (59, 61), das aus einem porösen Material ausgebildet ist, angelegt ist, um ein Anhaften von Abschnitten (21), die entlang der mindestens einen Ebene (63) transportiert werden, an das zumindest eine Transportband (59, 61) zu bewirken, das aus einem porösen Material ausgebildet ist.

6. Faserstoff-Schneidsystem (1) nach einem der vorhergehenden Ansprüche, **dadurch gekennzeichnet, dass** entlang mindestens einer Ebene (63) der Vielzahl von Ebenen (63) Wärme (67) auf zumindest eines der Transportbänder (59, 61) zum Erwärmen von Abschnitten (21) ausgeübt wird, die entlang der mindestens einen Ebene (63) transportiert werden.

7. Faserstoff-Schneidsystem (1) nach einem der vorhergehenden Ansprüche, **dadurch gekennzeichnet, dass** der erste und der zweite gekrümmte Weg in der Weise angeordnet sind, dass Abschnitte (21), die entlang des ersten Transportweges (23) transportiert werden, zwischen dem ersten und dem zweiten Transportband (5, 7) eingeklemmt sind, wenn sie sich von einer Ebene (25, 27, 29, 63) zu der nächsten Ebene (27, 29, 31, 63) bewegen, und/oder
dass der erste und der zweite gekrümmte Weg in der Weise angeordnet sind, dass Abschnitte (21), die entlang einer Ebene (27, 29, 31, 63) des ersten Transportweges (23) transportiert werden, zwischen dem ersten und dem zweiten Transportband (5, 7) eingeklemmt sind.

8. Faserstoff-Schneidsystem (1) nach einem der vorhergehenden Ansprüche, **dadurch gekennzeichnet, dass** zwischen jeden zwei aufeinander folgenden Ebenen (25, 27, 29, 31) des ersten Transportweges (23) das erste und das zweite Transportband (5, 7) über mindestens eine Rolle (33, 69, 71, 73) geführt sind.

9. Faserstoff-Schneidsystem (1) nach Anspruch 8, **dadurch gekennzeichnet, dass** zwischen zwei aufeinander folgenden Ebenen (25, 27, 29, 31) des ersten Transportweges (23) das erste und das zweite Transportband (5, 7) über zwei Rollen (69, 73) geführt sind, die voneinander vertikal durch einen vertikalen Abstand beanstandet sind, wobei die zwei Rollen (69, 73) in der Weise angepasst sind, dass der vertikale Abstand zum Einstellen einer Spannung zwischen dem ersten und dem zweiten Transportband (5, 7) modifiziert werden kann,
wobei das erste und/oder das zweite Transportband (5, 7) bevorzugt über eine bewegbare Spannrolle (74) geführt sind, die zum Einstellen einer Spannung des ersten und/oder des zweiten Transportbandes (5, 7) bewegt werden kann.

10. Faserstoff-Schneidsystem (1) nach einem der vorhergehenden Ansprüche, **dadurch gekennzeichnet, dass** eine Bindemittelaufbringeinheit (75) vorgesehen ist, die angeordnet und angepasst ist, um Bindemittel auf Abschnitte (21) aufzubringen, die entlang des ersten Transportweges (23) transportiert werden.

11. Faserstoff-Schneidsystem (1) nach Anspruch 10, **dadurch gekennzeichnet, dass** die Bindemittelaufbringeinheit (75) ein Bindemittelband (79), das in der Nähe der ersten Transportanordnung (3) angeordnet ist, in einer Endlosschleife entlang eines gekrümmten Bindemittelweges geführt ist und antreibbar ist, um sich in einer Binderichtung entlang des gekrümmten Bindemittelweges zu bewegen, und
eine Bindemittelsprüheinheit (77) aufweist, die angepasst ist, um ein Bindemittel zu empfangen und betrieben werden kann, um Bindemittel auf das Bindemittelband (79) zu sprühen,
wobei zum Aufbringen von Bindemittel auf Abschnitte (21), die entlang des ersten Transportweges (23) transportiert werden, die Abschnitte (21) zwischen dem Bindemittelband (79), das sich in der Binderichtung bewegt und auf das von der Bindemittelsprüheinheit (77) Bindemittel gesprüht worden ist, und einem von dem ersten oder dem zweiten Transportband (5, 7) in der Weise eingeklemmt sind, dass Bindemittel von dem Bindemittelband (79) auf die Abschnitte (21) übertragen wird.

12. Faserstoff-Schneidsystem (1) nach Anspruch 10 oder 11, **dadurch gekennzeichnet, dass** die Bindemittelaufbringeinheit (75) eine thermische Aktivierungseinheit (81) zum Erwärmen von Abschnitten (21) aufweist, auf die Bindemittel aufgebracht worden ist.

13. Verfahren zum Schneiden eines Faserstoffs unter Verwendung eines Faserstoff-Schneidsystems (1) nach einem der vorhergehenden Ansprüche, wobei das Verfahren die folgenden Schritte aufweist:
- Zuführen einer Bahn von Faserstoff (15) zu dem Schneidabschnitt (17) des ersten gekrümmten Weges durch die Faserstoff-Zuführeinheit (13), während sich das erste Transportband (5) in der ersten Transportrichtung (9) bewegt,
- Transportieren der von der Faserstoff-Zuführeinheit (13) zugeführten Bahn von Faserstoff (15) durch das erste Transportband (5) in der ersten Transportrichtung (9),
- Schneiden der durch das erste Transportband (5) transportierten Bahn von Faserstoff (15) in Abschnitte (21) mit der Schneideinheit (19),
- Transportieren der Abschnitte (21) entlang des ersten Transportweges (23), während das erste und das zweite Transportband (5, 7) in der ersten bzw. der zweiten Transportrichtung (9, 11) bewegt werden.

14. Verfahren zum Schneiden eines Faserstoffs nach Anspruch 13, bei dem das Faserstoff-Schneidsystem (1) ein Faserstoff-Schneidsystem (1) nach Anspruch 3 ist, wobei das Verfahren ferner den folgenden Schritt aufweist:
- Transportieren der Abschnitte entlang des zweiten Transportweges (47), während das dritte und das vierte Transportband (39, 41) in der dritten bzw. vierten Transportrichtung (43, 45) bewegt werden.

15. Verfahren zum Schneiden eines Faserstoffs nach Anspruch 13 oder 14, bei dem das Faserstoff-Schneidsystem (1) ein Faserstoff-Schneidsystem (1) nach einem der Ansprüche 10 bis 12 ist, wobei das Verfahren ferner den folgenden Schritt aufweist:
- Aufbringen von Bindemittel auf Abschnitte (21), die entlang des ersten Transportweges (23) transportiert werden, unter Verwendung der Bindemittelaufbringeinheit (75)

## Revendications

1. Système de découpage de tissu en fibres (1) comprenant :
un premier montage de transport (3) comprenant une première bande convoyeuse sans fin (5) guidée en une boucle sans fin le long d'une première trajectoire courbée et qui peut être entraînée pour se déplacer dans une première direction de transport (9) le long de la première trajectoire courbée, la première trajectoire courbée comprenant une section de découpage (17) dans laquelle, le système de découpage de tissu en fibres (1) étant dans une position opérationnelle, la première bande convoyeuse sans fin (5) s'étend dans la direction horizontale,
une unité d'alimentation en tissu en fibres (13) adaptée pour recevoir un lé de tissu en fibres (15) et en état de fonctionnement pour alimenter le lé (15) à la section de découpage (17) de telle manière que, lorsque la première bande convoyeuse sans fin (5) est déplacée dans la première direction de transport (9), le lé (15) est transporté par la première bande convoyeuse sans fin (5) le long de la section de découpage (17) et
une unité de découpage (19) disposée près de la section de découpage (17) et adaptée pour être opérationnelle pour découper un lé de tissu en fibres (15) en pièces (21), lequel lé (15) est alimenté à la section de découpage (17) par l'unité d'alimentation en tissu en fibres (13) et transporté par la première bande convoyeuse sans fin (5) lorsqu'elle se déplace dans la première direction de transport (9),
**caractérisé en ce que**
le premier montage de transport (3) comprend de plus une seconde bande convoyeuse sans fin (7) guidée en une boucle sans fin le long d'une seconde trajectoire courbée et qui peut être entraînée pour se déplacer dans une seconde direction de transport (11) le long de la seconde trajectoire courbée,
la première trajectoire courbée et la seconde trajectoire courbée étant arrangées de telle manière que, lorsque la première et la seconde bande convoyeuse (5, 7) sont entraînées pour se déplacer respectivement dans la première et dans la seconde direction de transport (9, 11), elles coopèrent pour définir, pour des pièces (21) découpées par l'unité de découpage (19), une première voie de transport (23) qui comprend une pluralité de niveaux espacés verticalement (25, 27, 29, 31, 63) qui s'étendent transversalement par rapport à la direction verticale et qui sont arrangés l'un au-dessus de l'autre,
la section de découpage (17) définit le premier niveau (25) et chacun des niveaux suivants (27, 29, 31, 63) est défini par une section d'au moins l'une des trajectoires courbées, la première et la seconde, de la première et de la seconde bande convoyeuse (5, 7) dans lequel la bande convoyeuse respective (5, 7) s'étend dans une direction transversalement par rapport à la direction verticale et
des pièces (21) transportées le long de la première voie de transport (23) se déplacent d'un niveau (25, 27, 29, 31, 63) au prochain niveau (27, 29, 31, 63) en partant du premier niveau (25), cependant qu'elles sont supportées en alternance à l'encontre de la force gravitationnelle par la première et la seconde bande convoyeuse (5, 7) sur des niveaux consécutifs (25, 27, 29, 31, 63).

2. Système de découpage de tissu en fibres (1) selon la revendication 1, **caractérisé en ce que** la première voie de transport (23) comprend une section de raccordement (35), des pièces (21) transportées le long de la section de raccordement (35) de la première voie de transport (23) se déplaçant du dernier niveau (31) au premier niveau (25) et des pièces (21) transportées le long de la section de raccordement (35) étant serrées entre la première et la seconde bande convoyeuse (5, 7) qui s'étendent parallèlement l'une à l'autre dans la section de raccordement (35).

3. Système de découpage de tissu en fibres (1) selon la revendication 1, **caractérisé en ce que** le système de découpage de tissu en fibres (1) comprend un second montage de transport (37) qui comprend :
une troisième bande convoyeuse sans fin (39) guidée en une boucle sans fin le long d'une troisième trajectoire courbée et qui peut être entraînée pour se déplacer dans une troisième direction de transport (43) le long de la troisième trajectoire courbée et
une quatrième bande convoyeuse sans fin (41) guidée en une boucle sans fin le long d'une quatrième trajectoire courbée et qui peut être entraînée pour se déplacer dans une quatrième direction de transport (45) le long de la quatrième trajectoire courbée,
la troisième et la quatrième trajectoire courbée étant arrangées de telle manière que, lorsque la troisième et la quatrième bandes convoyeuses (39, 41) sont entraînées pour se déplacer respectivement dans la troisième et la quatrième direction de transport (43, 45), elles coopèrent pour former une seconde voie de transport (47) qui comprend une pluralité de niveaux espacés verticalement qui s'étendent horizontalement (49, 51, 53, 55), arrangés l'un au-dessus de l'autre,
chaque niveau (49, 51, 53, 55) étant défini par une section d'au moins l'une des trajectoires courbées, la troisième et la quatrième, de la troisième et de la quatrième bande convoyeuse (39, 41) dans lequel la bande convoyeuse respective (39, 41) s'étend dans une direction transversalement par rapport à la direction verticale et
des pièces (21) transportées le long de la seconde voie de transport (47) se déplaçant d'un niveau (49, 51, 53) au prochain niveau (51, 53, 55) en partant d'un premier niveau (49) de la seconde voie de transport (47), cependant qu'elles sont supportées en alternance par la troisième et de la quatrième bande convoyeuse (39, 41),
le second montage de transport (37) étant arrangé adjacent au premier montage de transport (3) et le premier niveau (49) de la seconde voie de transport (47) s'étendant en extension du dernier niveau (31) de la première voie de transport (23) de telle manière que des pièces (21) transportées le long du dernier niveau (31) de la première voie de transport (23) sont transférées au premier niveau (49) de la seconde voie de transport (47),
des pièces (21) transportées le long de la première voie de transport (23) se déplaçant verticalement dans la direction opposée à celle des pièces (21) transportées le long de la seconde voie de transport (47).

4. Système de découpage de tissu en fibres (1) selon l'une quelconque des revendications précédentes, **caractérisé en ce qu'**au moins l'une des bandes convoyeuses (59, 61) est formée en un matériau poreux.

5. Système de découpage de tissu en fibres (1) selon la revendication 4, **caractérisé en ce qu'**un vide (65) est appliqué à la bande convoyeuse qui existe au moins (59, 61) formée en un matériau poreux le long d'au moins un niveau (63) de la pluralité de niveaux (63) pour faire adhérer des pièces (21) transportées le long dudit niveau qui existe au moins (63) à la bande convoyeuse qui existe au moins (59, 61) formée en un matériau poreux.

6. Système de découpage de tissu en fibres (1) selon l'une quelconque des revendications précédentes, **caractérisé en ce que** de la chaleur (67) est appliquée à au moins l'une des bandes convoyeuses (59, 61) le long d'au moins un niveau (63) de la pluralité de niveaux (63) pour chauffer des pièces (21) transportées le long dudit niveau qui existe au moins (63).

7. Système de découpage de tissu en fibres (1) selon l'une quelconque des revendications précédentes, **caractérisé en ce que** la première trajectoire courbée et la seconde trajectoire courbée sont arrangées telles que des pièces (21) transportées le long de la première voie de transport (23) sont serrées entre la première et la seconde bande convoyeuse (5, 7) lorsqu'elles se déplacent d'un niveau (25, 27, 29, 63) au prochain niveau (27, 29, 31, 63) et/ou que la première trajectoire courbée et la seconde trajectoire courbée sont arrangées telles que des pièces (21) transportées le long d'un niveau (25, 27, 29, 63) de la première voie de transport (23) sont serrées entre première et la seconde bande convoyeuse (5, 7).

8. Système de découpage de tissu en fibres (1) selon l'une quelconque des revendications précédentes, **caractérisé en ce que** la première et la seconde bande convoyeuse (5, 7) sont guidées, entre deux niveaux consécutifs quelconques (25, 27, 29, 31) de la première voie de transport (23), autour d'au moins un rouleau (33, 69, 71, 73).

9. Système de découpage de tissu en fibres (1) selon la revendication 8, **caractérisé en ce que** la première et la seconde bande convoyeuse (5, 7) sont guidées, entre deux niveaux consécutifs (25, 27, 29, 31) de la première voie de transport (23), autour de deux rouleaux (69, 73) espacés verticalement l'un de l'autre par une distance verticale, les deux rouleaux (69, 73) étant adaptés de telle manière que la distance verticale peut être modifiée pour ajuster une tension de la première et de la seconde bande convoyeuse (5, 7),
la première et/ou la seconde bande convoyeuse (5, 7) étant de préférence guidées autour d'un rouleau tendeur (74) qui peut être déplacé pour ajuster une tension de la première et/ou de la seconde bande convoyeuse (5, 7).

10. Système de découpage de tissu en fibres (1) selon l'une quelconque des revendications précédentes, **caractérisé en ce qu'**une unité d'application de liant (75) est prévue qui est arrangée et adaptée pour appliquer du liant aux pièces (21) transportées le long de la première voie de transport (23).

11. Système de découpage de tissu en fibres (1) selon la revendication 10, **caractérisé en ce que** l'unité d'application de liant (75) comprend une courroie de liant (79) disposée près du premier montage de transport (3), guidée en une boucle sans fin le long d'une trajectoire de liant courbée et qui peut être entraînée pour se déplacée dans une direction de liaison le long de la trajectoire de liant courbée et
une unité de pulvérisation de liant (77) adaptée pour recevoir un liant et opérationnelle pour pulvériser du liant sur la courroie de liant (79),
cependant que, pour appliquer du liant aux pièces (21) transportées le long de la première voie de transport (23), les pièces (21) sont serrées entre la courroie de liant (79), qui se déplace dans la direction de liaison et sur laquelle du liant a été pulvérisé par l'unité d'application de liant (75), et l'une des deux bandes convoyeuses, la première et la seconde (5, 7), de telle manière que du liant est transféré de la courroie de liant (79) aux pièces (21).

12. Système de découpage de tissu en fibres (1) selon la revendication 10 ou 11, **caractérisé en ce que** l'unité d'application de liant (75) comprend une unité d'activation thermique (81) pour chauffer des pièces (21) auxquelles du liant a été appliqué.

13. Procédé de découpage d'un tissu en fibres qui utilise un système de découpage de tissu en fibres (1) selon l'une quelconque des revendications précédentes comprenant les étapes :
- d'alimentation d'un lé de tissu en fibres (15) à la section de découpage (17) de la première trajectoire courbée par l'unité d'alimentation en tissu en fibres (13) pendant que la première bande convoyeuse (5) se déplace dans la première direction de transport (9),
- de transport du lé de tissu en fibres (15) alimenté par l'unité d'alimentation en tissu en fibres (13) par la première bande convoyeuse (5) dans la première direction de transport (9),
- de découpage du lé de tissu en fibres (15) transporté par la première bande convoyeuse (5) en pièces (21) avec l'unité de découpage (19),
- de transport des pièces (21) le long de la première voie de transport (23) pendant que la première et la seconde bande convoyeuse (5, 7) sont déplacées respectivement dans la première et la seconde direction de transport (9, 11).

14. Procédé de découpage d'un tissu en fibres selon la revendication 13, le système de découpage de tissu en fibres (1) étant un système de découpage de tissu en fibres (1) selon la revendication 3, comprenant de plus l'étape de :
- transport des pièces le long de la seconde voie de transport (47) pendant que la troisième et la quatrième bande convoyeuse (39, 41) se déplacent respectivement dans la troisième et la quatrième direction de transport (43, 45).

15. Procédé de découpage d'un tissu en fibres selon la revendication 13 ou 14, le système de découpage de tissu en fibres (1) étant un système de découpage de tissu en fibres (1) selon l'une des revendications 10 à 12, comprenant de plus l'étape :
- d'application de liant aux pièces (21) transportées le long de la première voie de transport (23) en utilisant l'unité d'application de liant (75).
